# EUROPEAN PATENT APPLICATION

(11) **EP 4 707 466 A2**
(43) Date of publication of application: **11.03.2026**
(21) Application number: 26152595.0
(22) Date of filing: 29.12.2022
(51) Int. Cl.: E01H 4/02

(54) **VEHICLE AND METHOD FOR LOCATING A VEHICLE**

(30) Priority: 30.12.2021 IT 202100033116
(62) Divisional of application: 22217099.5
(71) Applicant: PRINOTH S.p.A., 39049 Vipiteno (BZ) (IT)
(72) Inventor: KIRCHMAIR, Martin, 39049 VIPITENO (BZ) (IT)
(74) Representative: Studio Torta S.p.A.

(57) **Abstract**

Method for locating a vehicle (1), preferably a crawler vehicle (1) and in particular a snow grooming vehicle, within a working region (11), the working region (11) comprising at least one reference element (12), the method comprising the steps of: acquiring a reference model (MR) of the working region (11) comprising reference data (DR) relating to the at least one reference element (12); detecting, via at least one sensor (23) of the vehicle (1), data (DD) relating to an area (31) of the working region (11) surrounding the vehicle (1); comparing the data (DD) detected by the at least one sensor (23) with the reference data (DR), to verify whether at least a part of the data (DD) detected by the at least one sensor (23) corresponds to the reference data (DR); and determining a position (PV) of the vehicle (1) within the working region (11) on the basis of the comparison between the data (DD) detected by the at least one sensor (23) and the reference data (DR).

## Description

### CROSS-REFERENCE TO RELATED APPLICATIONS

This patent application claims priority from Italian patent application no. 102021000033116 filed on December 30, 2021, the entire disclosure of which is incorporated herein by reference.

### Technical field

The present invention relates to a vehicle, preferably a crawler vehicle and in particular a snow grooming vehicle, to a method for locating a vehicle, preferably a crawler vehicle, and to a method for controlling a vehicle, preferably a crawler vehicle.

### Background art

As is known, the localisation of a crawler vehicle is carried out by means GNSS systems (*Global Navigation Satellite Systems*), for example the American GPS system (*Global Positioning System*)*.* In order to operate, the navigation satellite system must receive signals from satellites. Therefore, if there are problems concerning the reception of such signals, the localisation could fail.

For example, in case of a snow grooming vehicle, there can be signal reception problems if the snow grooming vehicle operates in a closed environment or in a place where the mountain conformation does not allow for a good satellite signal reception.

A purpose of the present invention is to provide a crawler vehicle, in particular a snow grooming vehicle, a method for locating a crawler vehicle and a method for controlling a crawler vehicle, which can overcome or at least mitigate the aforementioned problems.

### Disclosure of the invention

The aforementioned purpose is achieved by a method for locating a vehicle as claimed in claim 1.

Thanks to the present invention, a crawler vehicle can be located under any use condition and in any environment in which it is located, even in closed environments and/or even in areas where the position detection satellite signal cannot be received, for example in places where, due to the particular land conformation, the position detection signal of the satellites cannot be received or in remote areas of the globe that are not covered by position detection satellites.

The present invention also relates to a method for determining the height of the snowpack within a working region of a vehicle as claimed in claim 10.

The present invention further relates to a method for controlling a vehicle as claimed in claim 12.

The present invention further relates to a vehicle as claimed in claim 14.

### Brief description of the drawings

For a better understanding of the present invention, a preferred embodiment is described below, by way of non-limiting example and with reference to the accompanying drawings, wherein:
- figure 1 is a side view of a crawler vehicle according to the present invention;
- figure 2 is a schematic view of the vehicle of figure 1 in a closed environment;
- figure 3 is a view from a point within a working region belonging to the closed environment of figure 2;
- figure 4 is a schematic view of the vehicle of figure 1 in an open environment;
- figure 5 is a view from a point within a working region belonging to the open environment of figure 4; and
- figure 6 is a block diagram of a location device of the vehicle of figure 1.

### Detailed description of the invention

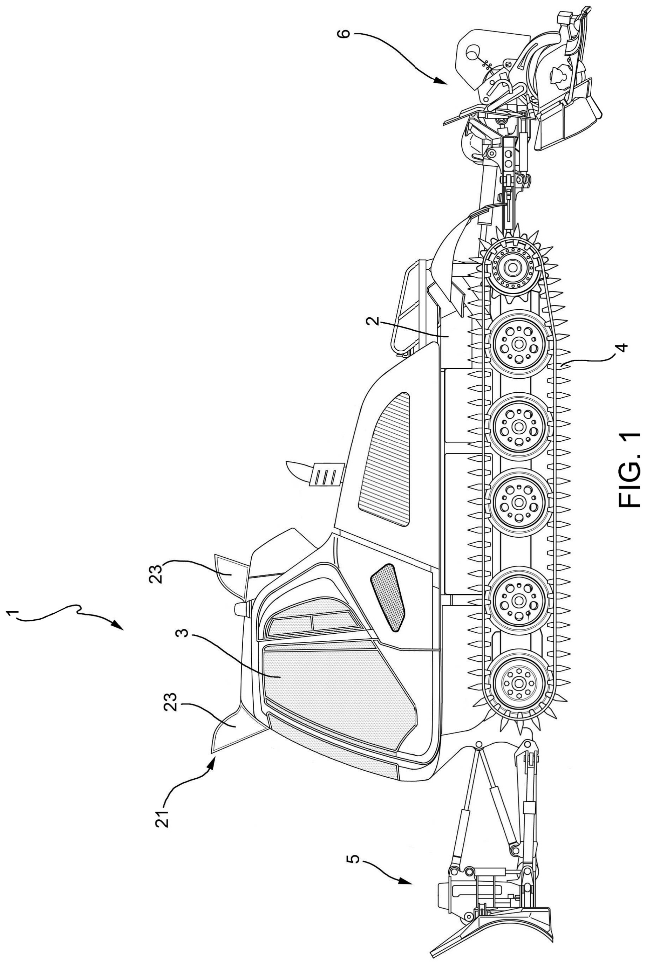

With reference to figure 1, there is indicated by 1 a crawler vehicle according to the present invention.

In the embodiment shown in figure 1, the crawler vehicle 1 is a snow grooming vehicle.

In another embodiment which is not shown herein, the crawler vehicle 1 is a vegetation management vehicle.

In another embodiment which is not shown herein, the crawler vehicle 1 is a multipurpose tracked vehicle to carry out tasks of different sorts in uneven grounds of different sorts.

The crawler vehicle 1 comprises a frame 2, a driver's cabin 3 housed on the frame 2, a pair of tracks 4 (only one of them being shown in figure 1) and at least one tool, for example a blade or shovel 5, supported at the front by the frame 2, and/or a tiller assembly 6, supported at the rear by the frame 2.

The crawler vehicle 1 can move within a working region 11, which can belong to a closed or open environment.

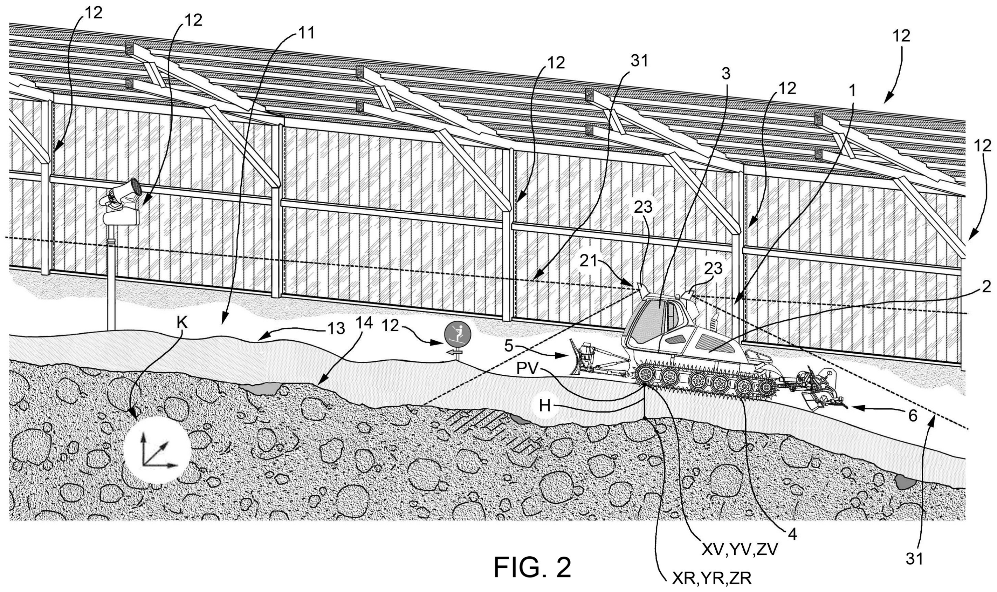

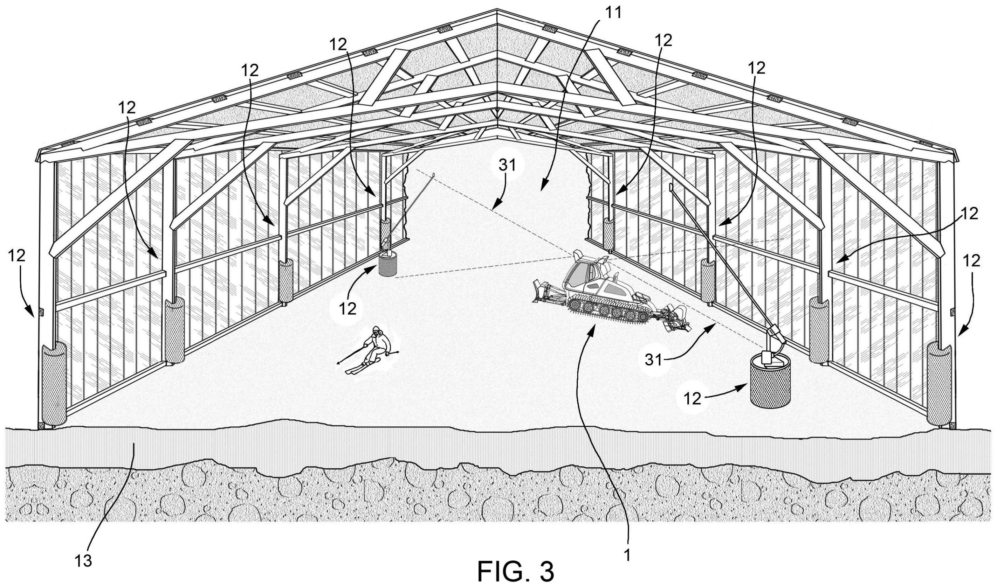

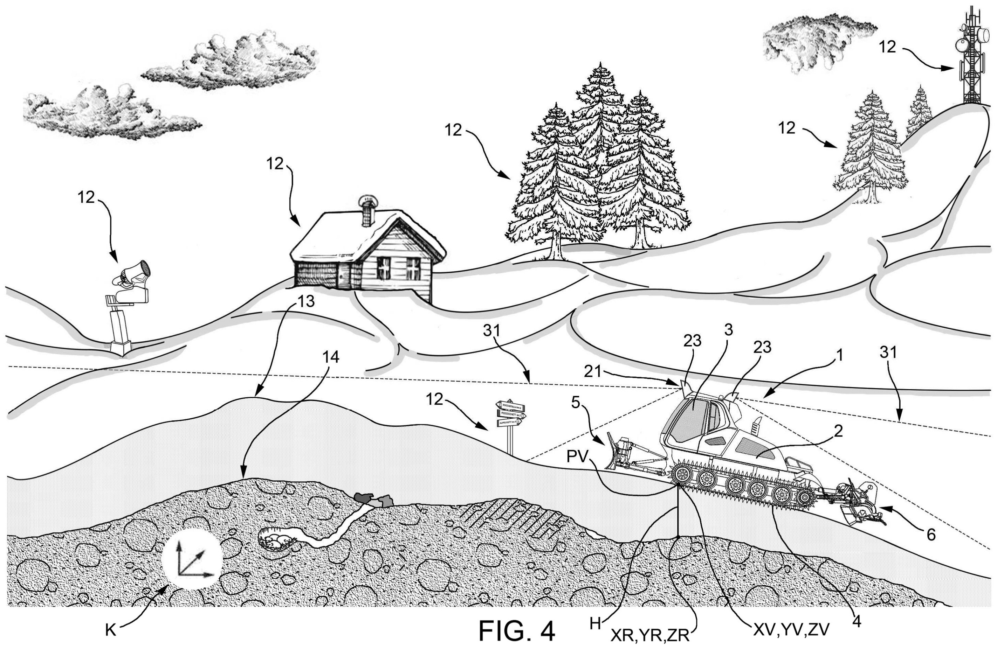

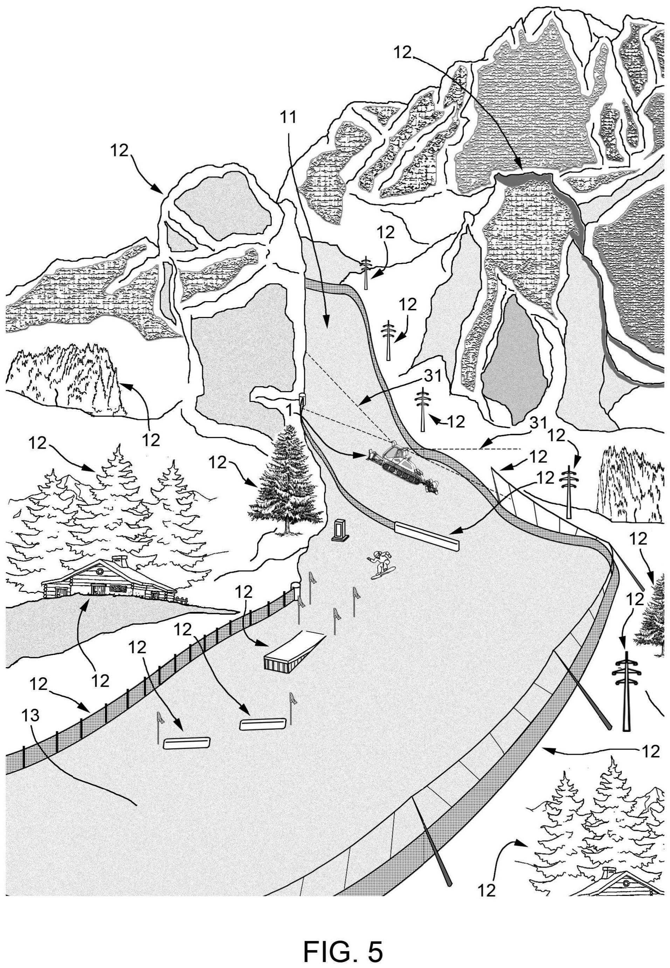

The working region 11 is preferably a ski slope, which can be indoor (figures 2 and 3) or outdoor (figures 4 and 5), and comprises at least one reference element 12.

In particular, the at least one reference element 12 is a physical object, or part thereof, visible from at least one point within the working region 11 and at least partly not covered by the snowpack 13.

The at least one reference element 12 can be an artificial element, for example a post or a station of a cableway, a snow cannon, a building of any kind, a fixed fence, a ceiling or a side wall of a covered ski area.

The at least one reference element 12 can be a natural element, for example a tree, a stone, a portion of a mountain or hill or plain.

With reference to figures 2 and 4, the crawler vehicle 1 comprises a location device 21, which is configured to determine a position PV of the crawler vehicle 1 within the working region 11, i.e. the position of a predetermined point of the crawler vehicle 1 with respect to a fixed reference system K.

The fixed reference system K can be a global reference system, i.e. the same of navigation satellite systems. Alternatively, the fixed reference system K can be a local reference system, i.e. relating to the working region 11. In this case, the origin of the fixed reference system K can be a predetermined point of the working region 11, for example a point belonging to the soil 14.

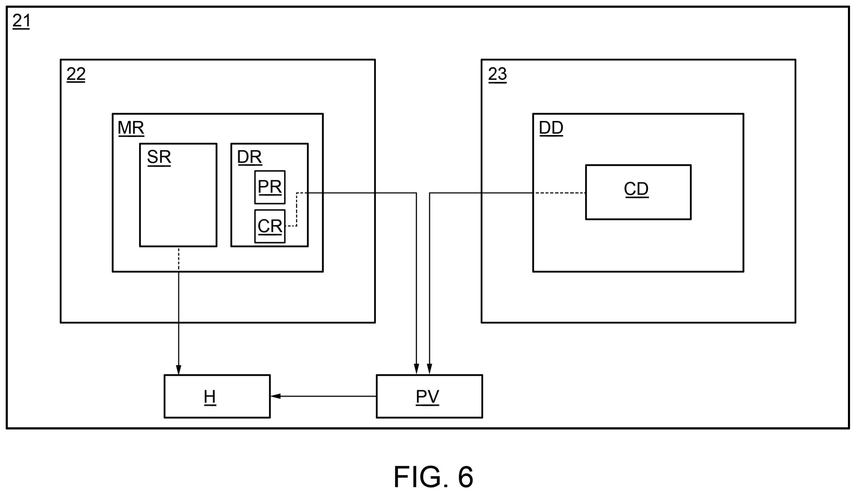

The location device 21 (figure 6) comprises a memory 22 and at least one sensor 23.

The memory 22 is configured to store a reference model MR of the working region 11 comprising reference data DR, relating to the at least one reference system 12 of the working region 11, and characterisation data SR, relating to a three-dimensional characterisation of the soil 14.

The characterisation data SR allows a three-dimensional model of the soil 14 to be obtained.

The reference data DR comprises a position PR and a conformation CR of the at least one reference element 12. In particular, each conformation CR is coupled to a respective position PR.

In particular, the conformation CR comprises data representative of a profile and/ profiles and/or an outline and/or outlines and/or a surface and/or surfaces and/or details of the at least one reference element 12.

Conveniently, the characterisation data SR and the position of the at least one reference element 12 are expressed via coordinates, for example Cartesian or cylindrical coordinates, with respect to the fixed reference system K.

The characterisation data SR relating to the soil 14 and/or the reference data DR relating to the at least one reference element 12, in particular the position PR and the conformation CR of the at least one reference element 12, can be acquired by three-dimensionally scanning the working region 11 and/or by three-dimensionally modelling the working region 11.

In an alternative embodiment, the characterisation data SR relating to the soil 14 are provided by a map produced by a third entity, for example a map provided by a military or civil geographical institute.

After such process, the three-dimensional reference model MR of the working region 11 is obtained, which can be changed. In particular, any change to the soil 14 and/or to the at least one reference element 12 can be reproduced in the reference model MR, by scanning again the working region 11 or part thereof and/or by three-dimensionally modelling again the working region 11 or part thereof. For example, a new reference element 12 can be added to the reference model MR and/or a reference element 12, already present in the reference model MR, can be removed or the position PR and/or the conformation CR thereof can be changed.

In a non-limiting embodiment of the present invention, the scanning performed to obtain the reference model MR is carried out with a crawler vehicle 1 with the at least one sensor 23.

In another non-limiting embodiment of the present invention, the location device 21 comprises a neural network and the reference model MR, or part thereof, is defined by the parameters of the configuration and/or of the setting of the neural network obtained via a learning process of the neural network, in other words the parameters of the reference model MR can be the parameters of the neural network properly trained with a learning process to recognise the reference elements 12 or the reference model MR can be defined by the neural network itself properly trained with a learning process to recognise the reference elements 12.

The at least one sensor 23 is preferably chosen from the group comprising lidar, radar, camera, video camera, thermal camera, proximity sensor preferably magnetic or ultrasonic.

The at least one sensor 23 is housed on the crawler vehicle 1, for example is rigidly coupled to the frame 2 or to the driver's cabin 3 or to one of the tools 5, 6 of the crawler vehicle 1.

In particular, the memory 22 is configured to store position and orientation of the at least one sensor 23 with respect to the crawler vehicle 1, i.e. with respect to the predetermined point of the crawler vehicle 1. Therefore, the location device 21 is configured to determine the position PV of the crawler vehicle 1, i.e. the position of the predetermined point of the crawler vehicle 1 with respect to the fixed reference system K, on the basis of the position and the orientation of the at least one sensor 23 with respect to the fixed reference system K, via kinematic relationships of transformation of reference systems.

Conveniently, the location device 21 is configured to determine, via kinematic relationships of transformation of reference systems, the orientation of the crawler vehicle 1, for example the orientation of a longitudinal axis along which the frame 2 extends, with respect to the fixed reference system K.

Furthermore, the location device 21 is configured to determine position and orientation of any component of the crawler vehicle 1, for example of the blade or shovel 5 and/or of the tiller assembly 6.

The at least one sensor 23 (figure 6) is configured to detect data DD relating to an area 31 of the working region 11 surrounding the crawler vehicle 1. Therefore, the area 31 moves together with the crawler vehicle 1. In particular, the area 31 is defined by the framing of the at least one sensor 23.

The data DD detected by the at least one sensor 23 comprise a conformation CD of the area 31 of the working region 11 surrounding the crawler vehicle 1.

The at least one sensor 23 is configured to cyclically scan the area 31 of the working region 11 surrounding the crawler vehicle 1 so as to detect the data DD relating to the area 31, in particular so as to detect a conformation CD of the area 31.

The location device 21 is configured to compare the data DD detected by the at least one sensor 23 with the reference data DR, so as to verify whether at least a part of the data DD detected by the at least one sensor 23 corresponds to, preferably at least a part of, the reference data DR.

Preferably, the detected data DD are in the same format as the reference data DR, so as to be easily comparable therewith.

In particular, the location device 21 is configured to seek correspondences between a conformation CD of the area 31 of the working region 11 surrounding the vehicle 1 and a conformation CR of the at least one reference element 12.

Furthermore, the location device 21 is configured to determine the position PV of the crawler vehicle 1 within the working region 11 on the basis of the comparison between the data DD detected by the at least one sensor 23 and the reference data DR.

In particular, the location device 21 is configured to determine the position PV of the crawler vehicle 1 on the basis of the position PR of the at least one reference element 12, if at least a part of the area 31 of the working region 11 surrounding the crawler vehicle 1 has a conformation CD corresponding to the conformation CR of the at least one reference element 12.

In other words, the location device 21 compares the conformation CD of the detected area 31 with the conformation CR of the at least one reference element 12 and, if at least a part of the conformation CD of the area 31 corresponds to the conformation CR of the at least one reference element 12, it determines position and orientation of the at least one sensor 23 of the crawler vehicle 1 and, in turn, the position PV of the crawler vehicle 1.

More in detail, the location device 21 compares the conformation CD of the detected area 31 with the conformation CR of the at least one reference element 12 and, if at least a part of the conformation CD of the area 31 corresponds to the conformation CR of the at least one reference element 12, it defines the position PV of the crawler vehicle 1 on the basis of the position PR coupled to the reference conformation CR that at least partly corresponds to the detected conformation CD.

More in detail, the location device 21 compares the conformation CD of the detected area 31 with the conformation CR of the at least one reference element 12 and, if at least a part of the conformation CD of the area 31 corresponds to the conformation CR of the at least one reference element 12, it reads from the memory 22 the position PR coupled to the reference conformation CR that at least partly corresponds to the detected conformation CD and determines position and orientation of the at least one sensor 23 of the crawler vehicle 1 based on such position PR and on values defined by the comparison between the conformation CD and the conformation CR.

In other words, position and orientation of the at least one sensor 23 are such that, looking at the reference model MR from such position and with such orientation, at least a part of the conformation CD of the area 31 corresponds to the conformation CR of the at least one reference element 12. Since the conformation CR of the at least one reference element is coupled to the respective position PR and stored in the memory 22, the location device 21 traces the position PV of the crawler vehicle 1.

Finally, the location device 21 defines the position PV and the orientation of the crawler vehicle 1 on the basis of the determined position and orientation of the at least one sensor 23.

In an embodiment, position and orientation of the at least one sensor 23 and of the crawler vehicle 1 coincide.

In another embodiment, position and orientation of the at least one sensor 23 and of the crawler vehicle 1 are linked to each other by a predetermined relationship, in particular the predetermined relationship can be a function or a matrix.

In other words, the location device 21 determines the position PV of the crawler vehicle 1 by cyclically detecting the conformations CD and, when one of them at least partly corresponds to one of the stored conformations CR, it uses the position PR, coupled to the conformation CR selected by the comparison, and the values defined by the comparison to define the position of the crawler vehicle 1. Preferably, the values defined by the comparison define distance and orientation between the reference element 12, identified by the comparison between the conformation CR and the conformation CD, and the at least one sensor 23.

Therefore, the present invention also relates to a method for locating a crawler vehicle 1, in particular a snow grooming vehicle, within a working region 11, the working region 11 comprising at least one reference element 12, preferably the working region 11 being a ski slope, the method comprising the steps of:
- acquiring a reference model MR of the working region 11 comprising reference data DR relating to the at least one reference element 12, the at least one reference element 12 being a physical object, or part thereof, visible from at least one point within the working region 11 and preferably at least partly not covered by the snowpack 13;
- detecting, via at least one sensor 23 of the crawler vehicle 1, data DD relating to an area 31 of the working region 11 surrounding the crawler vehicle 1; preferably, the at least one sensor 23 being selected from the group comprising: lidar, radar, camera, video camera, thermal camera, proximity sensor preferably magnetic or ultrasonic; preferably the detected data DD being in the same format as the reference data DR preferably the data DD comprising a conformation;
- comparing the data DD detected by the at least one sensor 23 with the reference data DR, in order to verify whether at least a part of the data DD detected by the at least one sensor 23 corresponds to, preferably at least a part of, the reference data DR; and
- determining a position PV of the crawler vehicle 1 within the working region 11 on the basis of the comparison between the data DD detected by the at least one sensor 23 and the reference data DR.

The position PV of the crawler vehicle 1 within the working region 11 can be used to determine the height H of the snowpack 13, which corresponds to the thickness of the snowpack 13 underneath the crawler vehicle 1.

Indeed, after having determined the position PV of the crawler vehicle 1 within the working region 11, the position PV of the crawler vehicle 1 can be compared with the reference model MR.

In particular, it is possible to calculate a difference H between a height ZV of the crawler vehicle 1 and a height ZR of the reference model MR, wherein:
- [XV, YV, ZV] is the position PV of the crawler vehicle 1 with respect to the fixed reference system K; and
- [XR, YR, ZR] is the position, with respect to the fixed reference system K, of a point belonging to the reference model MR, in particular it is the position of a point lying on the soil 14 and thus belonging to the characterisation data SR relating to the soil 14, so that XR = XV and YR = YV.

For the sake of convenience, PV can be chosen as the position of a point of the crawler vehicle 1 in contact with the snowpack 13. In this case, the height H of the snowpack 13 is equal to the difference H = ZV - ZR.

In case the snowpack 13 is not present, then ZR = ZV and thus H = 0, i.e. the crawler vehicle 1 lies on the soil 14.

The localisation of the crawler vehicle 1 and the height H of the snowpack 13 can be used to control the crawler vehicle 1.

In particular, the blade and/or shovel 5 and/or the tiller assembly 6 can be operated so as to conform the snowpack 13 to a target map, stored in the memory 22 and representative of a desired surface to be obtained by processing the snowpack 13.

Indeed, based on the localisation of the crawler vehicle 1, on the height H of the snowpack and on the target map, the blade and/or shovel 5 and/or the tiller assembly 6 can be operated so as to cause a removal of the snowpack 13 such as to conform the snowpack 13 to the target map.

In an alternative non-limiting embodiment of the present invention (which is not shown in the accompanying figures), the vehicle 1 is not a crawler vehicle and comprises a plurality of wheels comprising respective tyres.

Upon examination of the characteristics of the crawler vehicle 1 and of the methods, the advantages of the present invention are clear.

In particular, the localisation of the crawler vehicle 1 does not require navigation satellite systems and is possible even if the crawler vehicle 1 operates in a closed environment or in a place where the mountain conformation does not allow for a good satellite signal reception.

Furthermore, the localisation of the crawler vehicle 1 can be used to determine the height H of the snowpack 13 with no need for dedicated sensors.

Furthermore, the method for locating the crawler vehicle 1 and the method for determining the height H of the snowpack 13 can be used to control the crawler vehicle 1, thus allowing for an assisted or autonomous operation thereof.

In other words, thanks to the present invention, via the at least one sensor 23 of the location device 21, for example a lidar or a video camera, and without the aid of a GPS system, it is possible to determine the position PV of the crawler vehicle 1 by scanning the surrounding environment.

In particular, the location device 21 cyclically scans an area 31 surrounding the crawler vehicle 1 and, via the recognition of a reference element 12, for example the profile of a portion of a natural element present in the surrounding environment, such as a portion of a mountain or hill or plain, or a post or a station of a cableway or a snow cannon, determines the position of the crawler vehicle 1.

Finally, it is clear that modifications and variations can be made to the crawler vehicle 1 and the methods without going beyond the scope of protection defined by the appended claims.

## Claims

1. Method for locating a vehicle (1), preferably a crawler vehicle (1) and in particular a snow grooming vehicle, within a working region (11), the working region (11) comprising at least one reference element (12), preferably the working region (11) being a ski slope, the method comprising the steps of:
a) acquiring a reference model (MR) of the working region (11) comprising reference data (DR) relating to the at least one reference element (12), the at least one reference element (12) being a physical object, or part thereof, visible from at least one point within the working region (11) and preferably at least partly not covered by snowpack (13);
b) detecting, via at least one sensor (23) of the vehicle (1), data (DD) relating to an area (31) of the working region (11) surrounding the vehicle (1); preferably the at least one sensor (23) being selected from the group comprising: lidar, radar, camera, video camera, thermal camera, proximity sensor preferably magnetic or ultrasonic; preferably the detected data (DD) being in the same format as the reference data (DR) ;
c) comparing the data (DD) detected by the at least one sensor (23) with the reference data (DR), to verify whether at least a part of the data (DD) detected by the at least one sensor (23) corresponds to, preferably at least a part of, the reference data (DR); and
d) determining a position (PV) of the vehicle (1) within the working region (11) on the basis of the comparison between the data (DD) detected by the at least one sensor (23) and the reference data (DR).

2. Method as claimed in claim 1, wherein the reference model (MR) comprises characterisation data (SR), relating to a three-dimensional characterisation of soil (14), and the reference data (DR) relating to the at least one reference element (12) of the working region (11).

3. Method as claimed in claim 1 or 2, wherein the reference data (DR) comprise a position (PR) and a conformation (CR) of the at least one reference element (12).

4. Method as claimed in any of the preceding claims, wherein the data (DD) detected by the at least one sensor (23) comprise a conformation (CD) of the area (31) of the working region (11) surrounding the vehicle (1).

5. Method as claimed in any of the preceding claims, wherein step a) comprises the step of three-dimensionally scanning the working region (11).

6. Method as claimed in any of the preceding claims, wherein step a) comprises the step of three-dimensionally modelling the working region (11).

7. Method as claimed in any of the preceding claims, wherein the step b) comprises the step of cyclically scanning, via the at least one sensor (23), the area (31) of the working region (11) surrounding the vehicle (1) to detect the data (DD) relating to said area (31).

8. Method as claimed in any of the preceding claims, wherein step c) comprises the step of seeking correspondences between a conformation (CD) of the area (31) of the working region (11) surrounding the vehicle (1) and a conformation (CR) of the at least one reference element (12).

9. Method as claimed in any of the preceding claims, wherein step d) comprises the step of determining the position (PV) of the vehicle (1) on the basis of a position (PR) of the at least one reference element (12), at least a part of the area (31) of the working region (11) surrounding the vehicle (1) having a conformation (CD) corresponding to a conformation (CR) of the at least one reference element (12).

10. Method for determining the height (H) of the snowpack (13) within a working region (11) of a vehicle (1), preferably a crawler vehicle (1), the method comprising the steps of determining the position (PV) of the vehicle (1) within the working region (11) as claimed in any of the preceding claims, and comparing the position (PV) of the vehicle (1) with the reference model (MR).

11. Method as claimed in claim 10, wherein the step of comparing the position (PV) of the vehicle (1) with the reference model (MR) comprises the step of calculating a difference (H) between an altitude (ZV) of the vehicle (1) and an altitude (ZR) of the reference model (MR).

12. Method for controlling a vehicle (1), preferably a crawler vehicle (1), comprising the step of controlling the vehicle (1) on the basis of the location of the vehicle (1) determined by the location method as claimed in any of claims from 1 to 9, and on the basis of the height (H) of the snowpack (13) determined by the method for determining the height (H) of the snowpack (13) as claimed in any of claims from 10 to 11.

13. Method as claimed in claim 12, wherein the vehicle (1) is a snow grooming vehicle movable on a snowpack (13) and comprises at least one tool (5, 6) configured to modify the snowpack (13), and wherein the step of controlling the vehicle (1) comprises the step of operating the at least one tool (5, 6) to conform the snowpack (13) to a target map representative of a desired surface to be obtained by processing the snowpack (13).

14. Vehicle, preferably crawler vehicle, configured to implement a method as claimed in any of the preceding claims.

15. Vehicle, preferably crawler vehicle, movable within a working region (11), the working region (11) comprising at least one reference element (12), the vehicle (1) comprising a location device (21) comprising:
- at least one memory (22) configured to store a reference model (MR) of the working region (11) comprising reference data (DR) relating to the at least one reference element (12); and
- at least one sensor (23), preferably selected from the group comprising lidar, radar, camera, video camera, thermal camera, proximity sensor preferably magnetic or ultrasonic;
the at least one sensor (23) being configured to detect data (DD) relating to an area (31) of the working region (11) surrounding the vehicle (1),
the location device (21) being configured to:
- compare the data (DD) detected by the at least one sensor (23) with the reference data (DR), to verify whether at least a part of the data (DD) detected by the at least one sensor (23) corresponds to, preferably at least a part of, the reference data (DR); and
- determine a position (PV) of the vehicle (1) within the working region (11) on the basis of the comparison between the data (DD) detected by the at least one sensor (23) and the reference data (DR).
